# DEMANDE DE BREVET EUROPEEN

(11) **EP 1 498 672 A1**
(43) Date de publication de la demande: **19.01.2005**
(21) Numéro de dépôt: 04291752.6
(22) Date de dépôt: 09.07.2004
(51) Int. Cl.: F25B 41/00, F16L 41/08, F16L 11/04, B60H 1/00

(54) **Elément tubulaire pour circuit de climatisation**

(30) Priorité: 15.07.2003 FR 0308599
(71) Demandeur: HUTCHINSON, 75008 Paris (FR)
(72) Inventeur: Tourte, Marc, 45700 Villemandeur (FR); Lemoine, Jean-Philippe, 45200 Amilly (FR)
(74) Mandataire: Doireau, Marc

(57) **Abrégé**

Elément tubulaire (20) pour transporter un fluide frigorigène entre deux composants d'un circuit de climatisation, ledit élément (20) étant un tube (22) d'une seule pièce, caractérisé en ce que le tube (22) est une tube monocouche en matière plastique ou thermoplastique.

## Description

L'invention concerne un élément tubulaire pour un circuit de climatisation d'un véhicule à moteur par exemple.

Un circuit de climatisation est un circuit fermé qui comprend plusieurs éléments, notamment un compresseur, un condenseur, un réservoir déshydratant, un système de détente et un évaporateur, et dans lequel circule un fluide frigorigène. Tous ces éléments sont reliés par des flexibles constitués par des éléments tubulaires rigides et/ou souples, qui présentent vers chacune de leurs extrémités un élément de fixation et des moyens de raccordement étanches. Les éléments du circuit de climatisation sont répartis à l'intérieur du compartiment moteur du véhicule, sachant que le compresseur est entraîné par l'arbre moteur du véhicule, alors que les autres éléments sont fixés à la caisse du véhicule. Un circuit de climatisation de ce type se scinde en une partie basse pression et une partie haute pression, celle-ci comprenant notamment le condenseur et le système de détente, ainsi que le flexible les reliant. Ce flexible dit haute pression avec le fluide frigorigène à une pression de l'ordre de 20 bars est constitué par l'assemblage d'éléments tubulaires rigides et souples, les parties tubulaires souples procurant une certaine aide au montage sur chaîne en pouvant se déformer suivant le cheminement que doit suivre le flexible pour relier le condenseur et le système de détente.
Dans la cas d'un circuit de climatisation à valve thermo-régulatrice, la partie haute pression comprend un élément supplémentaire ou réservoir déshydratant (dénommé « receiver dryer » en langue anglaise) qui est interposé entre le condenseur et l'évaporateur, ce qui nécessite la présence de deux flexibles haute pression entre ces éléments.

Ainsi, un flexible haute pression selon l'art antérieur nécessite de raccorder l'un à l'autre au moins un élément tubulaire rigide et un élément tubulaire souple, ce raccordement pouvant être effectué par une opération de sertissage de l'élément tubulaire fixe sur l'élément tubulaire souple. Ce type de raccordement est susceptible d'occasionner des fuites du fluide frigorigène, augmente localement l'encombrement du flexible haute pression et entraîne une restriction de passage pour le fluide frigorigène.

Un but de l'invention est de pallier les inconvénients d'un flexible haute pression selon l'art antérieur.

A cet effet, l'invention propose un élément tubulaire pour transporter un fluide frigorigène entre deux composants d'un circuit de climatisation, ledit élément étant un tube d'une seule pièce, qui est caractérisé en ce que le tube est un tube monocouche en matière plastique ou thermoplastique.

Avantageusement, l'élément tubulaire est réalisé en une matière thermoplastique tel qu'un polyamide, en particulier un polyamide 6-6 et présente une certaine souplesse.

D'une manière générale, l'élément tubulaire est fabriqué par extrusion et mis en forme suivant une configuration en trois dimensions selon le cheminement qu'il doit suivre une fois en place.

Selon un mode de réalisation, l'élément tubulaire comprend au moins vers chacune de ses deux extrémités un élément de fixation, réalisé en une matière plastique chargée ou non, et des moyens de raccordement étanches, chaque élément de fixation pouvant être rendu solidaire de l'élément tubulaire par une opération appropriée telle une opération de soudure par rotation par exemple.

Un élément tubulaire monocouche et d'une seule pièce selon l'invention présente de nombreux avantages par rapport à une solution selon l'art antérieur où cet élément tubulaire est notamment constitué par au moins un élément tubulaire rigide qu'il faut raccorder à au moins un élément tubulaire souple.

Parmi les avantages, on peut notamment citer l'élimination des raccordements par sertissage entre les éléments tubulaires rigides et souples, ces raccords pouvant être une source de fuites du fluide frigorigène, un gain de poids que l'on peut estimer comme étant de l'ordre de 50%, l'élimination de restrictions de passage entre les éléments tubulaires rigides et souples, un gain en terme d'encombrement, la suppression de toute pollution potentielle ajoutée pendant la phase de fabrication de ces raccords, et la possibilité d'optimiser le diamètre interne et l'épaisseur de l'élément tubulaire, une telle optimisation n'étant pas possible avec des flexibles haute pression de l'art antérieur pour des raisons économiques, car les volumes d'achat sont trop faibles pour obtenir notamment des fournisseurs des éléments tubulaires rigides ayant des cotes spéciales à souhait.

L'invention concerne également un circuit de climatisation comprenant un ensemble d'éléments tubulaires rigides et souples pour véhiculer un fluide frigorigène entre les différents composants du circuit, qui est caractérisé en ce que deux composants au moins dudit circuit sont reliés l'un à l'autre par un élément tubulaire conforme à l'invention, les deux composants du circuit étant notamment situés dans la partie haute pression du circuit.

D'autres avantages, caractéristiques et détails de l'invention ressortiront du complément de description qui va suivre en référence aux dessins annexés, donnés uniquement à titre d'exemple et dans lesquels :
- la figure 1 est une vue schématique pour illustrer un circuit de climatisation dans un véhicule à moteur, qui comprend une partie haute pression et une partie basse pression ;
- la figure 2 est une vue en perspective d'un flexible de climatisation selon l'art antérieur qui est monté dans la partie haute pression du circuit de climatisation de la figure 1;
- la figure 3 est une vue en perspective d'un flexible de climatisation selon l'invention et apte à remplacer celui de la figure 2;
- la figure 4 est une vue en coupe suivant la ligne IV-IV de la figure 3 ; et
- la figure 5 est une vue en perspective d'un élément de fixation monté à chaque extrémité du flexible de climatisation selon l'invention.

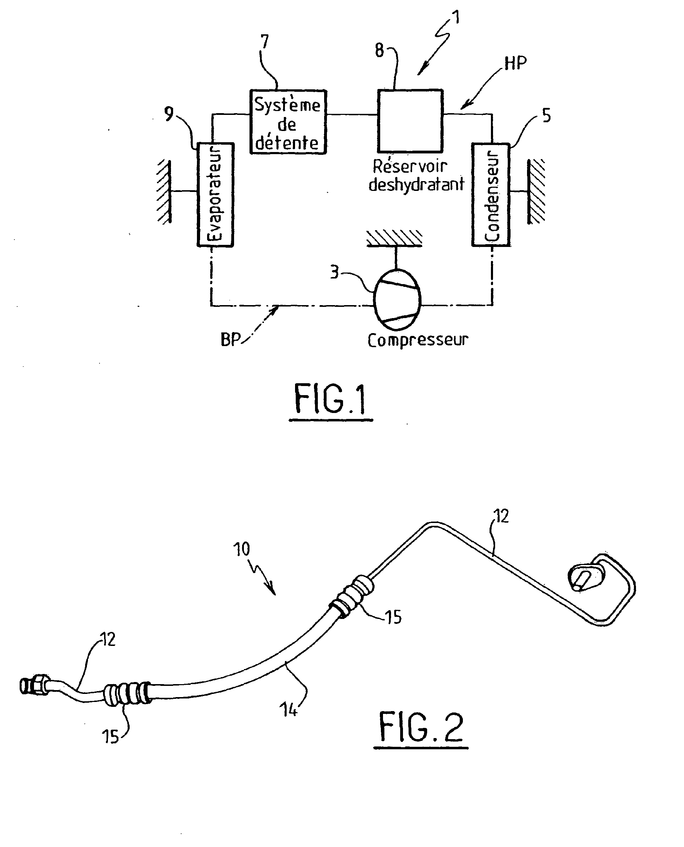

Sur la figure 1, on a schématiquement représenté un exemple de réalisation d'un circuit de climatisation 1 pour un véhicule à moteur par exemple. Ce circuit de climatisation 1 est une circuit fermé comprenant un compresseur 3 qui est entraîné par l'arbre moteur du véhicule, un condenseur 5, un système de détente 7, un réservoir déshydratant 8 (dénommé « receiver dryer » en langue anglaise) et un évaporateur 9. Dans ce circuit de climatisation, on a une partie basse pression BP, et une partie haute pression HP située entre le compresseur 3 et le système de détente 7 dans laquelle le fluide frigorigène, en particulier du R134A, est à une température de l'ordre de 100°C et à une pression de l'ordre de 20 bars.

Les différents éléments de ce circuit de climatisation 1 sont reliés par des flexibles qui sont chacun constitués par un élément tubulaire rigide ou souple ayant à ses deux extrémités des moyens de raccordement, ou par une combinaison appropriée d'éléments rigides et souples.

On a illustré sur la figure 2, un flexible 10 selon l'art antérieur qui est monté dans la partie haute pression HP du circuit de climatisation, ce flexible 10 étant constitué de deux éléments tubulaires rigides 12 entre lesquels est raccordé par sertissage un élément tubulaire souple 14 pour conférer au flexible 10 la souplesse souhaitée. Les sertissages sont indiqués par la référence 15.

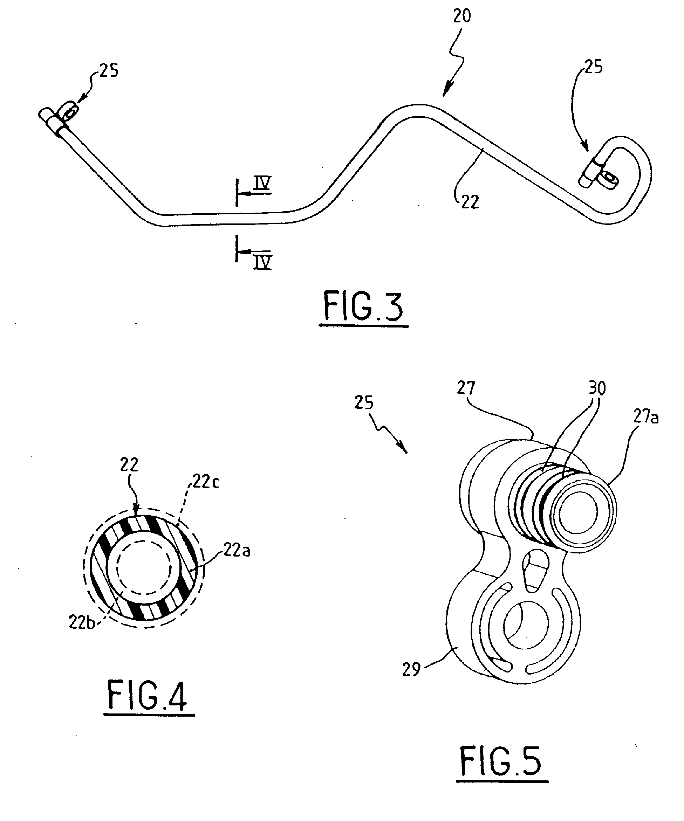

Un flexible 20 selon l'invention et qui est destiné à se substituer au flexible 10 de la figure 2 est illustré sur les figures 3 et 4. Ce flexible 20 est constitué par un élément tubulaire 22 qui est réalisé sous la forme d'un tube monocouche en matière plastique présentant une certaine souplesse. La matière plastique peut être une matière thermoplastique tel qu'un polyamide, en particulier un polyamide 6-6.

L'élément tubulaire 22 est fabriqué par extrusion et ensuite mis en forme suivant une configuration en trois dimensions suivant le cheminement qu'il doit suivre. La longueur de l'élément tubulaire 22 est variable, sachant qu'il peut avoir un diamètre intérieur de l'ordre de 4 à 12 mm et par exemple 7mm, et une épaisseur de l'ordre de 0,8 à 3 mm et par exemple 2mm.

L'élément tubulaire 22 est un tube ne présentant qu'une seule couche mais pourrait éventuellement être un tube multi-couche, comme cela est illustré en traits pointillés sur la figure 4. Dans ce cas, l'élément tubulaire 22 peut présenter une couche principale 22a, et une couche interne 22b et/ou une couche externe 22c qui sont également réalisés en un matériau souple, du polyamide 6 par exemple.

Le flexible 20 comprend également à chacune de ses deux extrémités un élément de fixation 25, avantageusement en une seule pièce, tel une bride par exemple qui est avantageusement réalisée en une matière plastique éventuellement chargée pour obtenir plus de rigidité. Un exemple de réalisation de cet élément de fixation 25 est illustré sur la figure 5 et a une forme de 8 par exemple en section droite comprenant deux parties tubulaires 27 et 29. La partie tubulaire 27 est fixée sur l'élément tubulaire 22 vers une extrémité de celui-ci et se prolonge axialement par une partie tubulaire 27a, alors que la partie tubulaire 29 est apte à recevoir un moyen de fixation tel une vis par exemple. La partie tubulaire 27a est une portion de tube qui peut être apte à former des moyens de raccordement étanches avec l'élément auquel l'élément tubulaire 22 se raccorde, au moyen de deux gorges périphériques 30 par exemple dans chacune desquelles vient se monter un joint d'étanchéité torique non représenté. Les moyens de raccordement étanches peuvent être conçus différemment, et les joints d'étanchéité ne sont pas nécessairement toriques.

D'une manière générale, l'élément de fixation 25 est solidarisé à l'élément tubulaire 22 par une opération appropriée telle une opération de soudure par rotation, sachant que cette solidarisation peut être obtenue par d'autres moyens connus en soi, par collage par exemple.

L'élément tubulaire 22 selon l'invention et tel qu'illustré à la figure 3 peut être également utilisé dans le circuit basse pression BP du circuit de climatisation de la figure 1. L'élément tubulaire 22 peut avoir un diamètre intérieur compris entre 10 et 15 mm, et une épaisseur de l'ordre de 0,7 à 3 mm. Autrement, selon l'invention, on peut concevoir un circuit de climatisation dont tous les flexibles de liaison peuvent être chacun constitués par un élément tubulaire 22.

A titre d'exemple, la perméabilité d'un élément tubulaire monocouche 22 avec une épaisseur de l'ordre de 2mm présente une perméabilité à un fluide frigorigène tel que du R134A qui est de l'ordre de 11.0g/m²/72h sous une pression de 27,5 bars et à une température de 100°C.

## Revendications

1. Elément tubulaire (20) pour transporter un fluide frigorigène entre deux composants d'un circuit de climatisation, ledit élément (20) étant un tube (22) d'une seule pièce, **caractérisé en ce que** le tube (22) est une tube monocouche en matière plastique ou thermoplastique.

2. Elément tubulaire selon la revendication 1, dans lequel la couche dudit tube (22) est réalisée en polyamide 6-6.

3. Elément tubulaire selon la revendication 1 ou 2, dans lequel ledit tube (22) est fabriqué par extrusion et mis en forme suivant une configuration en trois dimensions selon le cheminement qu'il doit suivre une fois en place.

4. Elément tubulaire selon l'une des revendications 1 à 3, dans lequel ledit tube (22) comprend au moins vers chacune de ses deux extrémités un élément de fixation (25), réalisé en une matière plastique chargée ou non.

5. Elément tubulaire selon la revendication 4, dans lequel chaque élément de fixation (25) est d'une seule pièce et solidarisé audit tube (22).

6. Elément tubulaire selon la revendication 5, dans lequel chaque élément de fixation (25) est solidarisé au tube (22) par une opération de soudure par rotation.

7. Elément tubulaire selon l'une des revendications 4 à 6, dans lequel chaque élément de fixation (25) est réalisé en polyamide 6-6 chargé de fibres de verre.

8. Circuit de climatisation comprenant un ensemble de d'éléments tubulaires rigides et souples pour véhiculer un fluide frigorigène entre les différents composants du circuit, **caractérisé en ce qu'**au moins deux composants dudit circuit sont reliés l'un à l'autre par un élément tubulaire monocouche tel que défini par l'une des revendications précédentes.

9. Circuit de climatisation selon la revendication 8, comprenant une partie de haute pression et une partie de basse pression, dans lequel l'élément tubulaire monocouche est monté entre au moins deux composants de la partie haute ou basse pression du circuit.

10. Circuit de climatisation, **caractérisé en ce que** tous les composants du circuit sont reliés par des éléments tubulaires monocouche tels que définis par l'une des revendications 1 à 7.
